# EUROPÄISCHE PATENTANMELDUNG

(11) **EP 1 829 951 A1**
(43) Veröffentlichungstag der Anmeldung: **05.09.2007**
(21) Anmeldenummer: 07102995.3
(22) Anmeldetag: 23.02.2007
(51) Int. Cl.: C10L 10/00, G01N 33/22, G01N 33/26

(54) **Verfahren zur Herstellung eines Ersatzbrennstoffes aus Abfall**

(30) Priorität: 01.03.2006 AT 3462006
(71) Anmelder: Zuser Umweltservice GmbH, 8120 Peggau (AT)
(72) Erfinder: Schuppler, Siegfried, 8124 Übelbach (AT); Zuser, Georg, 8124 Übelbach (AT); Zwittnig, Leopold, 8010 Graz (AT)
(74) Vertreter: Müllner, Martin

(57) **Zusammenfassung**

Ein Verfahren zur Herstellung eines Brennstoffes aus Abfall mit einem vorbestimmten Anteil an CO₂ fossilen Ursprungs in den Rauchgasen bei Verbrennung umfasst als ersten Schritt die Zerkleinerung des jeweils angelieferten Abfalls und die Bestimmung des jeweiligen CO₂-Gehalts fossilen Ursprungs in jeweils einer Probe. Der Abfall wird in Sektionen gelagert und der ermittelte CO₂ -Wert jeweils zugeordnet. Der Brennstoff wird als Gemisch aus den vorbereiteten Sektionen entsprechend dem gewünschten CO₂-Gehalt, gegebenenfalls unter Beigabe von Zuschlagstoffen insbesondere silikatischen Ursprungs bzw. Schlacke und bzw. oder von Biomasse, hergestellt. Sand kann zur Verbesserung der Rieselfreudigkeit dem Abfall bzw. Brennstoff beigegeben werden. Eine Sektion kann aus Gewichtsgründen unbrennbare Stoffe enthalten.

## Beschreibung

### Technisches Gebiet

Die Erfindung betrifft ein Verfahren zur Herstellung eines Brennstoffes aus Abfall mit einem vorbestimmten Anteil an CO₂ fossilen Ursprungs in den Rauchgasen bei Verbrennung.

### Stand der Technik

Das Ansteigen der Kohlendioxidkonzentration in der Atmosphäre ist mitverantwortlich für eine äußerst ungünstige Klimaveränderung, die als Treibhauseffekt der Öffentlichkeit bekannt wurde. Ihre Ursache finden diese teilweise dramatischen Vorgänge in den Folgen menschlicher Aktivitäten.

Das ungebrochene Wachstum der Weltbevölkerung verbunden mit steigendem Wohlstand der Bewohner weiter Teile unserer Erde wird nur durch einen ebenfalls steigenden Verbrauch an Ressourcen ermöglicht. Insbesondere die Bereitstellung von Energie führt zu einer Erhöhung der Kohlendioxidabgabe in die Atmosphäre, da bedeutende Mengen an kohlenstoffhältigen Rohstoffen zur Energiegewinnung eingesetzt werden.

Die wichtigsten kohlenstoffhältigen Energieträger sind bekanntermaßen Erdöl, Erdgas und Kohle. Der Kohlenstoff dieser Brennstoffe wurde bereits vor mehreren Millionen Jahren aus der Erdatmosphäre entfernt und durch biologische Aktivität gebunden. Unsere heutigen Klimaprobleme resultieren aus der kurzfristigen Freisetzung dieses Kohlenstoffs in Form von Kohlendioxid innerhalb nur weniger Jahrzehnte.

Um die Freisetzung von langfristig gebundenem Kohlenstoff zu bremsen wurden in der Konferenz von Kyoto umfangreiche Maßnahmen beschlossen. Die Industriestaaten werden verpflichtet, den Ausstoß von Kohlendioxid aus der Verbrennung von fossilen Energieträgern zu reduzieren.

Neben den verschiedensten Optimierungsmaßnahmen stellt die Energiegewinnung aus nachwachsenden Rohstoffen einen wichtigen Beitrag zum Klimaschutz dar. Der Einsatz von NAWAROs (Nachwachsenden Rohstoffen) wird im Rahmen der Vorgaben von Kyoto wirtschaftlich begünstigt. Das wesentliche wirtschaftliche Werkzeug stellt in diesem Zusammenhang der CO₂-Zertifikatehandel dar. Die Mitgliedstaaten haben sich verpflichtet, innerhalb von festgesetzten Fristen ihren Ausstoss an Kohlendioxid zu reduzieren. Für das Nichterreichen der Reduktionsziele müssen für jede Tonne Kohlendioxid, die zu viel in die Atmosphäre emittiert wird, CO₂-Zertifikate angekauft werden. Diese Zertifikate kommen damit einer Genehmigung zum Emittieren von Kohlendioxid gleich.

Betroffen von diesem Handel mit Kohlendioxid-Emissionsgenehmigungen sind vor allem die Energiewirtschaft und die Grundstoffindustrie, wie zum Beispiel Stahlwerke und Papierfabriken. Wirtschaftliche Erleichterungen gibt es für den Einsatz von alternativen Brennstoffen und Brennstoffgemischen, deren Kohlendioxidemission sich hinsichtlich des globalen Kohlenstoffkreislaufes günstiger auswirkt als die Verbrennung von ausschließlich fossilen Kohlenstoffverbindungen. Argumentiert wird die Begünstigung von nachwachsenden Energieträgern mit den Auswirkungen auf den Kohlenstoffkreislauf der Natur:

Kohlendioxid wird bekanntermaßen von pflanzlichen Lebewesen im Zuge der Photosynthese gebunden. Die Oxidation im Zuge der Verbrennung führt den gebundenen Kohlenstoff wiederum in Kohlendioxid über, sodass der Kreislauf geschlossen ist. Die Kohlendioxidkonzentration bleibt daher in der Atmosphäre so lange gleich, als sich die Freisetzung und die Einbindung durch die Biosphäre die Waage halten. Die Biosphäre ist jedoch nicht in der Lage, die zusätzlichen Kohlendioxidmengen aus der Verbrennung von fossilen Brennstoffen kurzfristig einzubinden.

Für die betroffenen Industrieunternehmungen, die ja letztlich den Gutteil der Reduktion des Kohlendioxidausstoßes herbeiführen müssen, bedeutet der Zukauf von CO₂-Zertifikaten für nicht erreichte oder nichterreichbare Einsparungsziele eine enorme Kostenbelastung. Der Umstieg auf nachwachsende Brennstoffe bringt dann Vorteile, wenn es sich um Brennstoffe handelt, deren Gehalt an nachwachsendem Kohlenstoff eindeutig definiert ist, wie zum Beispiel Brennholz oder Waldhackgut. Viele alternative Brennstoffe können jedoch auch aus Abfällen erzeugt werden. Aufgrund der unterschiedlichen Herkunft ist im Falle dieser Alternativbrennstoffe jedoch mit einem stark schwankendem Gehalt an nachwachsendem Kohlenstoff zu rechnen. Dies macht exakte Aussagen über den anteilsmäßigen Ausstoß von Kohlendioxid aus nicht fossilen Brennstoffanteilen unmöglich.

### Darstellung der Erfindung

### Technische Aufgabe

Ziel der vorliegenden Erfindung ist die Bereitstellung eines Verfahrens zur Herstellung eines Brennstoffes mit genau definiertem Gehalt an nachwachsendem Kohlenstoff.

### Technische Lösung

Das erfindungsgemäße Verfahren der eingangs angegebenen Art ist dadurch gekennzeichnet, dass der Abfall nach Anlieferung durch Selektion insbesondere mechanisch und bzw. oder durch Sichtung aufbereitet und dann zerkleinert wird, dass eine Probe entnommen und durch Verbrennen der CO₂ Gehalt fossilen Ursprungs z.B. nach der C-14 Methode bestimmt wird und der zugehörigen Charge bei ihrer Zwischenlagerung der Wert zugeordnet wird, dass mit weiteren Anlieferungen von Abfall analog verfahren wird, sodass sich einzelne Sektionen von Abfall mit unterschiedlichen CO₂-Werten ergeben und dass aus diesen Sektionen ein Gemisch entsprechend dem vorbestimmten, gewünschten CO₂ -Gehalt, gegebenenfalls unter Beigabe von Zuschlagstoffen insbesondere silikatischen Ursprungs bzw. Schlacke und/oder Beigabe von Biomasse, hergestellt wird.

Ausgangsmaterial für das erfindungsgemäße Verfahren sind stofflich nicht weiter verwertbare Abfälle und Produktionsrückstände, insbesondere solche aus der Altpapierverarbeitung. Endprodukte des erfindungsgemäßen Verfahrens sind Brennstoffe mit genau definiertem Anteil an nachwachsendem Kohlenstoff. Die Grenze zwischen fossilem und nachwachsendem Kohlenstoff wird folgendermaßen definiert: Als fossil gilt jener Kohlenstoff, der vor mehr als 10.000 Jahren photosynthetisch in die Biomasse eingebaut wurde. Festzuhalten ist jedoch, dass die Definition von fossilem Kohlenstoff auf Kundenwunsch mit dem nachstehend zitierten Analyseverfahren oder auch mit anderen noch nicht bekannten Methoden geändert werden kann.

Mit bekannten und technisch einfachen Verfahrensschritten wie Zerkleinerung, Siebung, Windsichtung, ballistischer Separation, Handsortierung, Magnetscheidung, Nichteisenmetallabscheidung (Wirbelstrom), Schwimm-Sinktrennung oder auch sonstiger Mahlvorgänge sowie Press- und Pelletiervorgänge kann ein homogener Materialstrom erzeugt werden.

Der Gehalt an nachwachsendem Kohlenstoff liegt nach dieser Behandlung innerhalb typischer Grenzen. Für die Feststellung des Anteils an nachwachsendem Kohlenstoff gibt es derzeit kein standardisiertes und im Sinne einer Norm anerkanntes Verfahren. Aus fachlicher Sicht ist jedoch nur die Radioisotopenmethode, die auch als C-14 Methode bekannt ist, geeignet, um zwischen Kohlenstoffanteilen zu unterscheiden, die vor mehr als 10.000 Jahren photosynthetisch gebunden wurden, und jenen, die vor weniger als 10.000 Jahren in die Biomasse eingebaut wurden und somit als nachwachsend bezeichnet werden können.

Nach Bestimmung des genauen Anteils von nachwachsendem Kohlenstoff in den Ausgangsmaterialien lässt sich der Anteil an nachwachsendem Kohlenstoff durch Zugabe von Biomasse, z.B. Holzabfall oder Inertmaterialien, z.B. Quarzsand, gezielt einstellen. Dabei ist der Einsatz von Additiven mit genau bekanntem Anteil an nachwachsendem Kohlenstoff unter gleichzeitiger Zugabe geringer Mengen Quarzsand (0,4 - 1,5 % der Rohbiomassemenge) beim Einstellungsvorgang von Vorteil. Die zu erzielende Produktqualität hinsichtlich des Anteils an nachwachsendem Kohlenstoff wird vorzugsweise in 5%-Schritten definiert. Auf Kundenwunsch können auch andere Qualitäten erreicht werden.

Bei der Herstellung dieser Brennstoffe nach dem erfindungsgemäßen Verfahren wird auf die kundenspezifischen Anforderungen Rücksicht genommen. Dazu gehören jedenfalls Qualitätsmerkmale wie Korngröße und Stückigkeit, Heizwert, Brennwert, Feuchte, Chlorgehalt, Gehalte an umweltrelevanten Schadstoffen und Gehalte an chemischen Substanzen und Verbindungen, die nach Verbrennung zu unerwünschten Folgeprodukten, insbesondere Luftschadstoffen führen.

Nach einem Merkmal der Erfindung wird den Chargen vor der CO₂-Probe durch Verbrennen Sand zur Beibehaltung der Rieselfähigkeit beigemischt. Auf diese Weise wird die Rieselfähigkeit der Ausgangsmaterialien beibehalten. Erfindungsgemäß kann einer Sektion zur Herstellung der Brennstoffmischung ein gegebenenfalls unbrennbarer Gewichtsbestandteil, wie z.B. Sand oder fein vermahlener unbrennbarer Abfall, beigemischt werden. Vorzugsweise wird einer Sektion zur Herstellung einer Brennstoffmischung ein gegebenenfalls brennbarer, biomassehaltiger Gewichtsbestandteil, wie z.B. Holzabfall oder Klärschlamm, beigemischt.

### Kurze Beschreibung der Abbildungen der Zeichnungen

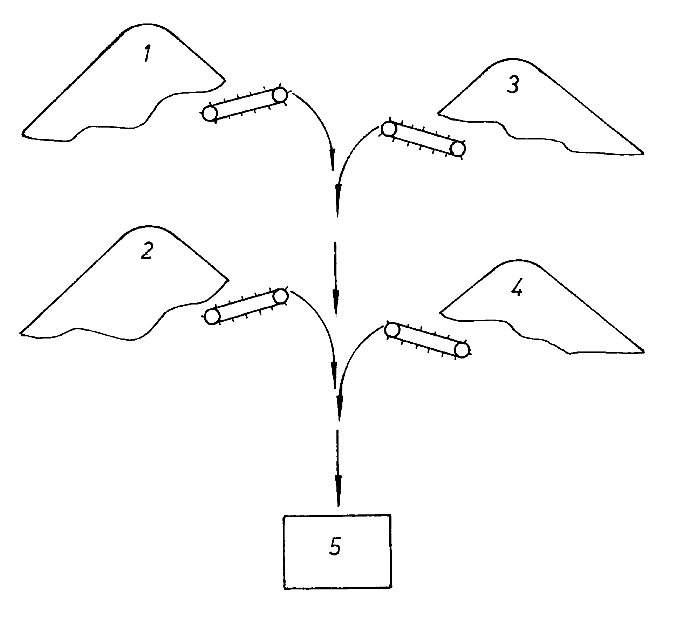

Das erfindungsgemäße Verfahren wird mit nachfolgendem Beispiel und an Hand der Zeichnung näher erläutert.

### Weg zur Ausführung der Erfindung

Angeliefert werden 100 Tonnen brennbarer Abfall, und zwar Rückstände aus dem Altpapierrecycling mit einem Brennwert Hₒ von 13.000 J/g, einem Wassergehalt H₂O von 50 Masse-%, einem Gesamtkohlenstoffgehalt (wasser- und aschefrei) C_{waf} von 38 Masse-% und einem Kohlenstoffgehalt fossiler Herkunft C_{fossil} von 100 kg/t. Nach Zerkleinern und Homogenisieren erfolgt Probeheizen von 500 kg Abfall, was 366 kg CO₂ fossilen Ursprungs pro Tonne ergibt. Dieser Charge wird auf dem "366 kg"-Haufen (Haufen bzw. Sektion 1) gelagert.

Die nächste Lieferung enthält völlig anderen Abfall, nämlich Klärschlamm mit einem Hₒ von 7.000 J/g, einem H₂O-Gehalt von 70 Masse-%, einem C_{waf} von 45 Masse-% und einem C_{fossil} von 0,2 kg/t. Dieser Abfall bringt bei analoger Vorgangsweise den Wert 0,7kg CO₂ fossilen Ursprungs pro Tonne. Diese Charge wird auf einen schon vorhandenen Haufen mit der Aufschrift "0,7kg" gelagert (Haufen bzw. Sektion 2).

Ferner gibt es einen Haufen Sand, nämlich kontaminierten Sand mit einem Hₒ von 0 J/g, einem H₂O-Gehalt von 5 Masse-%, einem C_{waf} von 0 Masse-% und einem C_{fossil} von 0 kg/t (Haufen bzw. Sektion 3), und einen Haufen Biomasse, nämlich Holzabfall mit einem Hₒ von 16.000 J/g, einem H₂O-Gehalt von 40 Masse-%, einem C_{waf} von 49 Masse-% und einem C _{fossil} von 0 kg/t. (Haufen bzw. Sektion 4)

Wenn ein Brennstoff 5 mit 256 kg fossilem CO₂ pro Tonne hergestellt werden soll, dann wird von Sektion 1 und Sektion 2 Material im Verhältnis 1 : 0,43 gemischt. Sand wird beigemischt, wenn das erforderliche Gewicht nicht erreicht wird. Biomasse wird beigemengt, um die Verbrennungseigenschaften zu verbessern. Man erhält einen Brennstoff 5 mit C_{fossil} von 70 kg/t, das heißt bei Verbrennung von einer Tonne Brennstoff kann mit rund 256 kg CO₂ aus fossilem Kohlenstoff gerechnet werden.

Beispiele für mögliche Zuschlagstoffe ohne Kohlenstoffgehalt aus nachwachsenden Rohstoffen sind Strahlsandrückstände, Formsande, Gießereisande, Streusplitt, Kehricht, kontaminierte Böden, Flugaschen, Schlacken, Molekularsieb, Mineralfasern, Kieswaschschlamm, Gesteinsmehle, Industriestäube, Ziegelsplitt.

Beispiele für Zuschlagstoffe mit Kohlenstoffgehalt aus nachwachsenden Rohstoffen sind Spuckstoffe (Zelluloseabfälle der Papierindustrie), Hausmüll, Grünschnitt, Rinde, Waldhackgut, Sägemehl, Altreifen, Pressrückstände, Ölsaaten, überlagerte Lebensmittel, Treber, Klärschlamm, Papierfaserschlamm, Biodiesel, Holzschleifstäube, Getreidespelzen, Pellets, Laub, Rechengut, Eisenbahnschwellen, Speisefett.

Die Verbrennung der mit dem erfindungsgemäßen Verfahren hergestellten Brennstoffe führt zu einem Abgasstrom, dessen Anteil an Kohlenstoff aus nachwachsenden Rohstoffen in Form von Kohlendioxid leicht zu berechnen ist. Somit kennt der Kunde bereits vor Einsatz dieser Brennstoffe in seiner Verbrennungsanlage die wirtschaftlichen Auswirkungen, die sich aus den Verpflichtungen durch das Kyoto-Protokoll ergeben werden. Dies stellt gegenüber jenen Methoden einen Vorteil dar, wo der Anteil an Kohlenstoff aus nachwachsenden Rohstoffen im Brennstoff unbekannt ist und die wirtschaftlichen Auswirkungen erst im Zuge von analytischen Untersuchungen des Abgasstromes bekannt werden.

## Patentansprüche

1. Verfahren zur Herstellung eines Brennstoffes aus Abfall mit einem vorbestimmten Anteil an CO₂ fossilen Ursprungs in den Rauchgasen bei Verbrennung, **dadurch gekennzeichnet, dass** der Abfall nach Anlieferung durch Selektion insbesondere mechanisch und bzw. oder durch Sichtung aufbereitet und dann zerkleinert wird, dass eine Probe entnommen und durch Verbrennen der CO₂-Gehalt fossilen Ursprungs z.B. nach der C-14 Methode bestimmt wird und der zugehörigen Charge bei ihrer Zwischenlagerung der Wert zugeordnet wird, dass mit weiteren Anlieferungen von Abfall analog verfahren wird, sodass sich einzelne Sektionen von Abfall mit unterschiedlichen CO₂-Werten ergeben, und dass aus diesen Sektionen ein Gemisch entsprechend dem vorbestimmten, gewünschten CO₂-Gehalt gegebenenfalls unter Beigabe von Zuschlagstoffen insbesondere silikatischen Ursprungs bzw. Schlacke und/oder Beigabe von Biomasse hergestellt wird.

2. Verfahren nach Anspruch 1, **dadurch gekennzeichnet, dass** den Chargen vor der CO₂-Probe durch Verbrennen Sand zur Beibehaltung der Rieselfähigkeit beigemischt wird.

3. Verfahren nach Anspruch 1, **dadurch gekennzeichnet, dass** einer Sektion zur Herstellung der Brennstoffmischung ein gegebenenfalls unbrennbarer Gewichtsbestandteil, wie z.B. Sand oder fein vermahlener unbrennbarer Abfall, beigemischt wird.

4. Verfahren nach Anspruch 1 **dadurch gekennzeichnet, dass** einer Sektion zur Herstellung einer Brennstoffmischung ein gegebenenfalls brennbarer, biomassehaltiger Gewichtsbestandteil, wie z.B. Holzabfall oder Klärschlamm, beigemischt wird.
